# EUROPEAN PATENT APPLICATION

(11) **EP 4 495 189 A1**
(43) Date of publication of application: **22.01.2025**
(21) Application number: 23306249.6
(22) Date of filing: 20.07.2023
(51) Int. Cl.: C08L 95/00

(54) **BITUMINOUS COMPOSITIONS COMPRISING A SPECIFIC DISTILLATION RESIDUE**

(71) Applicant: TOTALENERGIES ONETECH, 92400 Courbevoie (FR)
(72) Inventor: SCHOFIELD, Gary, Preston, Lancs PR2 2TZ (GB); ZAIN, Kaleem, Preston, Lancs PR2 2TZ (GB); HAIGH, Rebecca, Preston, Lancs PR2 2TZ (GB)
(74) Representative: Cabinet Beau de Loménie

(57) **Abstract**

The invention concerns a bituminous composition comprising at least one bitumen base and a distillation residue of hydrocarbon products obtained by the breakdown of a polymeric material under hydrothermal conditions, said distillation residue having an initial boiling point measured according to ASTM D7169:20 standard of at least 450°C, its method of manufacture and its use in various applications.

## Description

### Field

The present invention belongs to the field of bitumen, in particular to the field of bituminous compositions for use in various applications industrial uses, waterproof or isolation membranes, in particular used as roofing underlayments, road construction, civil engineering... The present invention concerns bituminous compositions comprising at least one bitumen base and a specific distillation residue of hydrocarbon products which have been obtained by the breakdown of a polymeric material. The present invention also relates to a method of manufacturing these compositions and to different uses of the newly proposed bituminous compositions.

### Backaround

Bitumen is the main hydrocarbon constituent used in road construction or civil engineering. A bituminous composition can be defined as a mixture of one or several bitumen bases with at least one additive and is qualified as bituminous binder in many uses. The bitumen bases are generally obtained from residues from the distillation of crude oil in the atmosphere and/or under vacuum. The main criteria to select bitumen bases and bituminous compositions for road application, but also for industrial ones (a typical example is the manufacture of membranes in particular used in waterproof roofing underlayments), are their technical characteristics, in particular their penetrability (measured at 25 °C according to EN 1426, also known as penetration), viscosity, softening point (also known as ring and ball temperature or ring and ball softening temperature measured according to EN 1427), rheological properties etc.

It is also known to use one or several additives with bitumen bases, in order to adapt the technical characteristics of the obtained bituminous composition. In order to be used in road construction, civil engineering and in membranes, bituminous compositions must have certain physical and chemical properties. One of the most important properties is the softening point. There are several ways to adjust the high in situ temperature behaviour, notably the softening point. One way is to use one or several polymers which, when added to the bitumen base, will change the properties of the obtained bituminous composition. However, the addition of these polymers entails additional costs.

It is known in the art to include waxes in a bituminous composition. For instance, WO 2019/041049 describes the addition of a wax as additive in formulations used in asphalt adhesive products (also known as bituminous composition or bituminous binder), such as peel-and-stick sheets or ice and water shields, in particular used in waterproof roofing underlayments. This wax can be made by catalytic depolymerisation of a polymeric material or by thermally degrading a polymeric material. The polymeric material may comprise recycled plastics and/or virgin plastics. The addition of the wax is described as having the ability to change the physical characteristics of the asphalt adhesive product and the resulting sheets, including its softening point. The invention described in WO 2019/227234 also proposes the addition of polymer, oligomer, or wax in a bituminous binder. The wax can made by catalytic and/or thermal depolymerization of a polymeric material. The polymeric material can be waste polymeric material feed. WO 2019/227234 mentions that this addition can increase the softening point of the asphalt, decrease the penetration of the asphalt, and/or shorten the oxidation of the asphalt.

In the prior art, the incorporation in a bituminous composition of a wax obtained by a Fischer-Tropsch process is also described. This addition leads to the increase of the softening point and to the decrease of the penetrability of the obtained bituminous composition. Given the gradual disappearance of the conventional oil, the petroleum industries are faced with a major challenge which is to develop techniques with a reduced carbon footprint. In particular, the use of sources from recycling is of particular interest.

In this context, the present invention aims to provide new bituminous compositions offering a new way of recycling plastic wastes. In the context of the invention, it is proposed to substitute a part of the bitumen base used in a bituminous composition with a specific distillation residue obtained from polymeric material, and in particular from plastic wastes. This use of products coming from the recycling plastic wastes results in bituminous compositions with satisfactory properties, in particular with good softening point and penetrability. The bituminous compositions and their manufacturing methods proposed in the context of the invention provide new possibilities for recycling plastic wastes, and are therefore particularly advantageous from an ecological point of view and are a new solution to reduce the carbon footprint. They can be seen as an alternative of the use of Fischer-Tropsch waxes types, as the addition of the specific selected distillation residue leads to an increase of the softening point and to a decrease of the penetrability. These effects were not obvious, as in previous works the applicant obtained other effects, with the incorporation of another kind of cut obtained from plastic wastes. In EP 4 124 638 A1, a distillation residue of pyrolysis oil obtained from plastic wastes has been added in a bituminous composition. This incorporation results in the increase or decrease of the softening point and to an increase or to a stagnation of the penetrability, but have never lead to a decrease of the penetrability which is particularly advantageous.

So, the invention relies on the identification of specific distillation residues obtained from a polymeric material, which are particularly suitable for use in bituminous compositions, as their introduction makes it possible to obtain interesting effects on the softening point, penetrability and the rheology on the prepared bituminous composition. Another secondary purpose of the invention is to propose a way to obtain bituminous compositions with a lower viscosity, at high temperature. As a result, a lower temperature can be used when applying the bituminous composition and the energy consumption is limited.

### Summary of the invention

In this context, the invention proposes a bituminous composition comprising at least one bitumen base and a distillation residue of hydrocarbon products obtained by the breakdown of a polymeric material under hydrothermal conditions, said distillation residue having an initial boiling point measured according to ASTM D7169:20 standard of at least 450°C.

According to an embodiment of the bituminous compositions of the invention, the distillation residue comprises a mixture of paraffins, olefins, naphtenics and aromatics. In particular, in the distillation residue, the paraffins represent 30 to 50% by weight of the distillation residue, the olefins and naphtenics represent, together, 30 to 50% by weight of the distillation residue, the aromatics represent 10 to 30% by weight of the distillation residue. In general, the distillation residue comprises less than 0.5% by weight of asphaltenes and/or less than 0.002% by weight of polycyclic aromatic hydrocarbon.

According to specific embodiments of the bituminous compositions of the invention that can be combined to the previous ones, the distillation residue has a penetrability, measured at 25 °C according to EN 1426, of at most 35 1/10 mm and/or the distillation residue has a boiling point measured according to ASTM D7169:20 standard, corresponding to 5% by weight, of at least 500°C (in other words, at most 5% by weight of the distillation residue has a boiling point of 500°C or less) and/or the distillation residue has a boiling point measured according to ASTM D7169:20 standard, corresponding to 10% by weight, of at least 530°C (in other words, at most 10% by weight of the distillation residue has a boiling point of 530°C or less) and/or the distillation residue comprises a fraction having a melting temperature of at least 110°C, and preferentially of at least 120°C and/or the distillation residue has a dynamic viscosity at 140°C measured according to EN 13302 standard of at least 20 mPa.s, and preferentially of at least 30 mPa.s.

According to specific embodiments of the bituminous compositions of the invention that can be combined to the previous ones, the distillation residue represents from 1% to 40% by weight, preferentially from 2% to 30% by weight, more preferentially from 5% to 20% by weight, based on the total weight of the bituminous composition.

According to other specific embodiments of the bituminous compositions of the invention that can be combined to the previous ones, the distillation residue is obtained by the following successive steps:
a)generating a reaction mixture comprising the polymeric material and an aqueous solvent,
b)treating the reaction mixture in a reactor apparatus at a reaction temperature of at least 350°C and a reaction pressure of at least 18 MPa (180 bar) over a period of time suitable for conversion of all or a portion of the polymeric material present in the reaction mixture into a fluid product stream, depressurising the fluid product stream, the depressurising comprising reducing the pressure of the fluid product stream to less than 2.5 MPa (25 bar) in a flash vessel thereby vaporizing at least a portion of the fluid product stream and generating a vapour comprising hydrocarbon products, steam, and gas, and the vaporizing provides energy to facilitate fractionation of the hydrocarbon products into different constituent parts; and
c)fractionating the hydrocarbon products into different constituent parts by distillation and collecting a heavy distillation residue having an initial boiling point measured according to ASTM D7169:20 standard of at least 450°C .

In particular, in these successive steps, the aqueous solvent is supercritical water and the generating a reaction mixture comprising the polymeric material and an aqueous solvent is carried out by the following successive steps:
- providing a molten stream of the polymeric material;
- injecting the aqueous solvent in a supercritical state into the molten stream of polymeric material; and
- mechanical mixing of the aqueous solvent and the molten stream of polymeric material.

According to other specific embodiments of the bituminous compositions of the invention that can be combined to the previous ones, the polymeric material is waste plastics, in particular waste plastics including polyethylene and/or polypropylene.

The bituminous compositions of the invention may also comprise a polymer, preferably selected from elastomers, more preferentially selected from block copolymers based on conjugated diene units and monovinyl aromatic hydrocarbon units. In particular, the polymer amount, and in particular the elastomer amount (and typically the crosslinked elastomer), represents at most 14 % by weight, preferably from 0.1 % to 12 % by weight, more preferentially from 0.5 % to 9 % by weight, advantageously, advantageously from 1 % to 8 % by weight, based on the total weight of the bituminous composition.

The bitumen base of the bituminous compositions is, advantageously, chosen among the bitumen from the refining of crude oil.

The present invention is also related to a method for the manufacture of a bituminous composition according to anyone of the preceding claims wherein the following components are mixed at a temperature in the range of 90 to 230°C, preferably of 120 to 200°C:
- a bitumen base, and
- a distillation residue of hydrocarbon products obtained by the breakdown of a polymeric material under hydrothermal conditions, said distillation residue having an initial boiling point measured according to ASTM D7169:20 standard of at least 450°C.

In this method, a polymer and, in particular, an elastomer may also be mixed with the bitumen base and the distillation residue.

Another object of the invention is the use of a bituminous composition according to the invention for preparing a waterproof roofing underlayment, a leaktight membrane, a noise-reduction membrane, an insulating membrane, a surface coating, a carpet tile or a seal coat.

The invention also relates to the use of a bituminous composition according to the invention as a bituminous binder in a surface dressing, a hot mix asphalt, a warm mix asphalt, a stress absorbing membrane interface, a cold mix asphalt, a cold-cast asphalt, an emulsion gravel, a base course, a tie course, a tack course, a surface course, a rut-resistant course, a draining surfacing mix, said bituminous binder being associated with recycled aggregates and/or millings.

The invention also relates to a method of preparing an asphalt mix wherein it comprises hot mixing a bituminous composition according to the invention with aggregates and/or recycled millings, and optionally mineral and/or synthetic fillers.

Another object of the present invention is an asphalt mix comprising a bituminous composition according to the invention in admixture with aggregates and/or recycled millings, and optionally mineral and/or synthetic fillers.

The invention also relates to an asphalt comprising a bituminous composition according to the invention mixed with mineral and/or synthetic fillers.

### Detailed description of the invention

### Definitions

Throughout this specification, unless the context requires otherwise, the word "comprise", or variations such as "comprises" or "comprising", will be understood to imply the inclusion of a stated element or method step or group of elements or method steps, but not the exclusion of any other element or method step or group of elements or method steps. According to preferred embodiments, the word "comprise", or variations such as "comprises" or "comprising" means "consist exclusively of".

As used in the subject specification, the singular forms "a", "an" and "the" include plural aspects unless the context clearly dictates otherwise. So, reference to a compound/entity, includes the single compound/entity and combinations/mixtures of two or more of such compounds/entities. Nevertheless, according to preferred embodiments, these terms designate a single compound/entity. Thus, for example, reference to "a distillation residue" includes a single distillation residue corresponding to the given definition, as well as two distillation residues corresponding to the given definition; reference to "the invention" includes single or multiple aspects taught by the present disclosure; and so forth. Aspects taught herein are encompassed by the term "invention". All aspects of the invention are enabled within the width of the claims.

As used herein, the terms "polymers" and "polymeric material" will be understood to encompass prepolymers, oligomers, homopolymers, (e.g. prepared from a single monomer species), copolymers (e.g. prepared from at least two monomer species), terpolymers, graft polymers, plastic, elastomeric material, rubber materials, and mixtures thereof. In some embodiments, the polymeric material(s) are synthetically made. In some embodiments, the polymeric materials may be natural materials with carbon-carbon backbones e.g. natural rubber and derivatives thereof. The terms "polymers" and "polymeric material" as used herein will be understood to specifically exclude: lignocellulosic matter; naturally-occurring carbohydrate polymers; lignin; cellulose; hemicellulose; combinations of any two of lignin, cellulose, hemicellulose; lignite (brown coal); subbituminous coal; and any combination thereof.

wt% or % by weight means the % in weight, based on the total weight of a specified material, composition ...

Unless specified otherwise, the cited standards are the standards in force on 1^{st} March 2023.

### Bitumen base

The invention concerns bitumen modified by the addition of at least one additive or adjuvant, also known as bituminous compositions. These may comprise one or more bitumen base that constitute(s) the essential part of the bituminous composition, i.e. generally represent(s) at least 50% by weight of the total weight of the bituminous composition, and preferably at least 70%, or even at least 75% and even more preferably at least 80% by weight of the total weight of the bituminous composition.

A bitumen base can be any bitumen, as known in the art. The bituminous composition can comprise one or more bitumen bases. The bitumen that can be used, as a bitumen base, in the invention includes the bitumen of natural origin, those contained in natural deposits of bitumen, natural asphalt or tar sands and the bitumen obtained from the refining of crude oil. A bitumen base used in the bituminous composition is advantageously chosen from the bitumen from the refining of crude oil, particularly from the bitumen containing asphaltenes. The bitumen may be obtained by conventional methods of bitumen manufacturing in a refinery, in particular by direct distillation and/or vacuum distillation of oil.

It is, in particular, standard to carry out the vacuum distillation of the atmospheric residues originating from the atmospheric distillation of crude oil. This manufacturing process consequently corresponds to the sequence of an atmospheric distillation and of a vacuum distillation, the feedstock feeding of the vacuum distillation corresponding to the atmospheric residue. The vacuum residues resulting from the vacuum distillation tower can be used as bitumen. In addition, these residues can optionally be subjected to other treatments in order to modify their mechanical properties, in particular their consistency. The bitumen may be optionally visbroken and/or deasphalted and/or air rectified. The visbreaking corresponds to a conversion process which employs thermal cracking reactions without supplying hydrogen.

The different bitumen obtained by the refining processes can be combined to achieve the best technical compromise in the bituminous composition.

The bitumen may also be a recycled bitumen or an oxidized bitumen.

The bitumen can be selected from bitumen fulfilling one of the following European standards EN 12591, EN 13924-1 (hard grade) or EN 13924-2 (multigrade).

In particular, the bituminous composition contains one or more bitumen base chosen among paving grade bitumen as defined by EN 12591 (2009 version). The bitumen can be a bitumen of hard or soft grade. For road application, the bitumen is advantageously chosen from bitumen of grades 10/20 to 250/330, for instance of grades 20/30, 30/45, 35/50, 40/60, 50/70, 70/100, 100/150, 160/220 and 250/330 and from hard grade bitumen as defined in EN 13924-1.

Advantageously, the bitumen base used in the invention has a penetrability, measured at 25 °C according to EN 1426, between 10 and 330 1/10 mm, preferably between 20 and 290 1/10 mm, more preferably between 50 and 290 1/10 mm.

Advantageously, the bituminous compositions corresponding to the invention have a penetrability, measured at 25 °C according to EN 1426, between 1 and 300 1/10 mm, preferably between 10 and 100 1/10 mm, more preferably between 30 and 100 1/10 mm.

Advantageously, the bitumen base used in the invention have a ring and ball softening temperature, measured according to EN 1427, preferably less than or equal to 100°C, preferably between 10°C and 95°C, and more preferably between 30°C and 60°C.

Advantageously, the bituminous compositions corresponding to the invention have a ring and ball softening temperature, measured according to EN 1427, preferably less than or equal to 120°C, preferably less than 100°C, and more preferably between 30°C and 95°C.

### Distillation residue

### Polymeric material

The hydrocarbon products, which are the source of the distillation residue, are obtained by the breakdown of a polymeric material under hydrothermal conditions. The breakdown corresponds to the conversion of the polymeric material by the cutting of the polymeric chains of the polymeric material and/or its depolymerisation, when this polymeric material is submitted to a hydrothermal treatment, such as a hydrothermal treatment described in WO 2021/064647 incorporated herein by reference. So, here the term "breakdown" is used in the same way as "depolymerisation" mentioned in WO 2021/064647.

The polymeric material may comprise, for example, plastics. The polymeric material typically corresponds to waste plastics. The polymeric material, and in particular the waste plastics, may be unsuitable for physical recycling methods. The polymeric material may be suitable currently only for landfill or for incineration, as end of life plastics. Classically, waste plastics contain at least some proportion of non-plastic contaminant(s) such as, for example, at least: 0.1 %, 0.5%, 1%, 5%, 10%, 15%, 20%, 25%, 30%, 35%, 40% by weight of non-plastic material. Non-limiting examples of such contaminants include dirt, paper, wood, food waste, soil, agricultural residues, metals, putrescible material, mineral matter, cardboard, plant and animal matter, fabric or fabric fibers.

Non-limiting examples of polymeric materials suitable for use in the present invention are given in WO 2021/064647 and described as follows. Polymeric materials suitable for use in the present invention include prepolymers, oligomers, homopolymers, copolymers, terpolymers, graft polymers, plastics, end of life plastics, waste plastics, elastomeric materials, rubber materials, and mixtures. Other non-limiting examples include polyethylene (PE), Low Density Polyethylene (LDPE), and in particular Linear Low Density Polyethylene (LLDPE), medium-density polyethylene (MDPE), High Density Polyethylene (HDPE), polypropylene (PP), polyester, polyethylene terephthalate) (PET), poly(lactic acid) PLA, poly (vinyl chloride) (PVC), polystyrene (PS), polyamide, nylon, nylon 6, nylon 6,6, acrylonitrile-butadiene-styrene (ABS), Poly(Ethylene vinyl alcohol) (E/VAL), Poly(Melamine formaldehyde) (MF), Poly(Phenol-formaldehyde) (PF), Epoxies, Polyacetal, (Acetal), Polyacrylates (Acrylic), Polyacrylonitrile (PAN), Polyamide-imide (PAI), Polyaryletherketone (PAEK), Polybutadiene (PBD), Polybutylene (PB), Polycarbonate (PC), Polydicyclopentadiene (PDCP), Polyketone (PK), polycondensate, Polyetheretherketone (PEEK), Polyetherimide (PEI), Polyethersulfone (PES), Polyethylenechlorinates, (PEC), Polyimide, (PI), Polymethylpentene (PMP), Poly(phenylene Oxide) (PPO), Polyphenylene Sulfide (PPS), Polyphthalamide, (PTA), Polysulfone (PSU), Polyurethane, (PU), Poly(vinylidene chloride) (PVDC), Poly(tetrafluoroethylene) PTFE, Poly(fluoroxy alkane) PFA, Poly(siloxanes), silicones, thermosplastics, thermosetting polymers, natural rubbers, tyre rubbers, ethylene propylene diene monomer rubbers EPDM, chloroprene rubbers, acrylonitrile butadiene (nitrile) rubbers, polyacrylate rubbers, ethylene acrylic rubbers, styrene-butadiene rubbers, polyester urethane rubbers, Polyether urethane rubbers, fluorosilicone rubbers, silicone rubbers, and copolymers, synthetic polymeric materials, naturally-occurring polymeric materials with carbon-carbon backbones, plastics, and mixtures thereof.

Without limitation, the polymeric material may comprise a low content of elements other than carbon, hydrogen and oxygen. For example, the polymeric material may contain less than about 5 wt% nitrogen, less than about 1 wt% nitrogen, less than about 0.5 wt% nitrogen, less than about 0.1 wt% nitrogen, or less than about 0.01 wt% nitrogen, as a weight percentage of total polymeric material weight. Additionally or alternatively, the polymeric material may comprise less than about 5 wt% total halogens, less than about 1 wt% total halogens, less than about 0.5 wt% total halogens, less than about 0.1 wt% total halogens, less than about 0.05 wt% total halogens, or less than about 0.01 wt% total halogens, as a percentage of total polymeric material weight. Additionally, or alternatively, the polymeric material may comprise traces of carbonates, notably calcium carbonate, phosphorus or silicon. Additionally or alternatively, the polymeric material may comprise a molar ratio of hydrogen to carbon (H/C) that is high. For example, the H/C molar ratio may be greater than 2.15, greater than 2.0, greater than 1.8, greater than 1.6, greater than 1.4, greater than 1.2, greater than 1.0, or greater than 0.8.

In some embodiments, the polymeric material may be in the form of mixed or sorted waste plastics and in some cases may be contaminated with organic and/or inorganic impurities. Waste plastics include, but are not limited to bags, jugs, bottles, pails, and/or other items containing, in particular, polyethylene (any one of, or combinations of, HDPE, LDPE, LLDPE and MDPE) or polypropylene. The waste plastic material may require some preprocessing before being processed under hydrothermal conditions. For example, the waste plastics may require chopping, grinding and/or sieving or screening to remove abrasive particles.

By way of non-limiting example, polymeric materials suitable for use in the present invention may have a melt mass-flow rate (MFR) of between 0.05 grams to 20 grams per 10 minutes, or 0.1 gram to 10 grams per 10 minutes, or 0.01 grams to 5 grams per 10 minutes as measured according to ISO 1133-1-2011 Plastics - Determination of the Melt Mass-Flow Rate (MFR).

The initial polymeric material may be in the form of an extrudate, as explained in WO 2021/064647, polymeric materials such as waste plastics may be readily prepared by means known in the art for extrusion by a suitable extruder.

### Breakdown under hydrothermal conditions and distillation

A suitable method to breakdown the polymeric material under hydrothermal conditions to produce hydrocarbon products is described in WO 2021/064647. Such a method includes the following successive steps:
a)generating a reaction mixture comprising the polymeric material and an aqueous solvent,
b)treating the reaction mixture in a reactor apparatus at a reaction temperature of at least 350°C and a reaction pressure of at least 18 MPa (180 bar) over a period of time suitable for conversion of all or a portion of the polymeric material present in the reaction mixture into a fluid product stream, depressurising the fluid product stream, the depressurising comprising reducing the pressure of the fluid product stream to less than 2.5 MPa (25 bar) in a flash vessel thereby vaporizing at least a portion of the fluid product stream and generating a vapour comprising hydrocarbon products, steam, and gas, and the vaporizing provides energy to facilitate fractionation of the hydrocarbon products into different constituent parts; and
c)fractionating the hydrocarbon products into different constituent parts by distillation and collecting a heavy distillation residue having an initial boiling point measured according to ASTM D7169:20 standard of at least 450°C .

As used herein, the term "aqueous solvent" refers to a solvent comprising at least one percent water based on total weight of solvent. An "aqueous solvent" may therefore comprise between one percent water and one hundred percent water based on total weight of solvent. An "aqueous solvent" will also be understood to include within its scope "aqueous alcohol", "aqueous ethanol", and "aqueous methanol". Advantageously, the aqueous solvent is water or steam (e.g. supercritical water, superheated steam or subcritical water).

Contacting a supercritical aqueous solvent with a polymeric material (optionally extruded) may initiate a supercritical to subcritical phase change in the aqueous solvent (i.e. bring it into a subcritical state as the temperature and/or pressure of the solvent falls below its critical point). The phase change may trigger a large release of energy which in turn may assist in successfully combining the aqueous solvent with the extruded polymeric material. Alternatively, contacting a supercritical aqueous solvent with the polymeric material (optionally extruded) may not initiate a supercritical to subcritical phase change in the aqueous solvent.

By way of non-limiting example only, the aqueous solvent may be supercritical (e.g. supercritical water), and may be at a temperature of between about 375°C and about 800°C, between about 375°C and about 600°C, between about 375°C and about 550°C, between about 375°C and about 500°C, or between about 375°C and about 450°C at the time of contacting the (potentially extruded) polymeric material.

The use of supercritical water as aqueous solvent is particularly preferred. In such a case, the method includes the following steps to generate a reaction mixture comprising the polymeric material and an aqueous solvent:
- providing a molten stream of the polymeric material;
- injecting the aqueous solvent in a supercritical state into the molten stream of polymeric material; and
- mechanical mixing of the aqueous solvent and the molten stream of polymeric material.

Combining the independently heated/pressurised solvent (e.g. aqueous solvent such as water) with the polymeric material (optionally extruded) may provide a means of generating a reaction mixture comprising a higher concentration of the polymeric material than could be achieved, for example, (i) by mixing an equivalent amount of the polymeric material which has not been subjected to an extrusion process with an equivalent amount of the independently heated and/or pressurised aqueous solvent; and/or (ii) by mixing an equivalent amount of the polymeric material which has not been subjected to an extrusion process with an equivalent amount of the aqueous solvent, and heating/pressurising the mixture to the same levels.

In some embodiments, supercritical solvent including, for example, aqueous supercritical solvent such as water, may be applied to polymeric material extrudate at the point of exit from the extruder and/or at multiple injection points along a length of a vessel connecting the extruder to another apparatus or component thereof including, for example, a static mixing tank or the reaction zone of a reactor (e.g. a hydrothermal reactor, a continuous flow hydrothermal reactor). Such an arrangement may be used to promote additional mixing of the polymeric material extrudate and/or to maintain the extrudate at a high temperature.

After the initial contacting of the polymeric material with the aqueous solvent, mixing of the polymeric material and the aqueous solvent may optionally be improved by using static mixing devices.

Step b) on the reaction mixture includes heating and pressurisation that may be carried out using known means in the art. For example, pressurisation may be generated via an extruder and/or pump(s) used to pressurise the aqueous solvent prior to contacting polymeric material. In continuous flow systems, pressure will generally change from atmospheric to target pressure during the time it takes to cross the extruder and/or pump (i.e. close to instantaneous).

In some embodiments, the reaction mixture may be brought to a target temperature and/or pressure in a time period of between about 30 seconds and about 30 minutes.

In some embodiments, the reaction mixture may be brought to a target temperature and/or pressure in a time period less than about 15 minutes, less than about 10 minutes, less than about 5 minutes, or less than about 2 minutes.

In certain embodiments, the reaction mixture may be brought to a target pressure substantially instantaneously or over a time period of between about 30 seconds and about 30 minutes, and brought to a target temperature in less than about 20 minutes, less than about 10 minutes, or less than about 5 minutes, less than 2 minutes.

In other embodiments, the reaction mixture may be brought to a target pressure substantially instantaneously and brought to a target temperature in less than about two minutes. In other embodiments, the reaction mixture may be brought to a target pressure substantially instantaneously and brought to a target temperature in between about 1 and about 2 minutes, or less than 20 seconds.

In some embodiments of the invention the reaction mixture may optionally be further heated by means of one or more indirect heaters after mixing with the solvent (e.g. a supercritical aqueous solvent). The indirect heater(s) may, for example, raise the temperature of the reaction mixture by more than an additional 10, 20, 30, 40, 50, 60, 70, 80, 90 100, 120°C or less than about an additional 150, 130, 110, 90, 70, 50°C. The indirect heating may increase the average temperature of the reaction mixture from about 380°C to about 450°C or about 400°C to about 460°C.

In some embodiments, the indirect heaters are not circumferential.

In some embodiments the indirect heater provides heat energy to the reaction mixture by means of superheated steam or supercritical water from a process boiler. Figure 2 of WO 2021/064647 shows one example of such a heater design. In some embodiments the additional indirect heating of the reaction mixture may be by means of electrical heating elements, and/or by a fluid heat exchanger and/or by a fluidized bed of, for example, ilmenite heated by combustion of calorific gas. In some embodiments, the heating elements are not circumferential. In some embodiments such calorific gas may comprise process gases and vapours formed by the depolymerization of polymeric material. In some embodiments, the electric heating elements are not circumferential.

The following means and conditions can be chosen for the heating and pressurisation. For example, the reaction mixture may be fed into a reactor (e.g. a hydrothermal reactor, a continuous flow hydrothermal reactor) where the polymeric material is subjected to pre-determined levels of temperature and pressure for a pre-determined time period to facilitate its conversion into hydrocarbon products of lower average molecular weight than the polymeric material prior to conversion. Thus, according to the methods of the present invention a reaction mixture comprising polymeric material (optionally extruded) and an aqueous solvent may be treated at a target temperature (or within a range of target temperatures) and a target pressure (or within a range of target pressures) for defined time period ("retention time" or "residence time") to provide products.

The average residence or retention time may be determined or measured or constrained by the flow rate of the polymeric material (optionally extruded) and/or the aqueous solvent. The optimal reaction temperature(s) and/or pressure(s) for a given reaction mixture may be readily determined by the skilled addressee by preparing and running a series of reactions that differ only by temperature and/or pressure used and analysing the yield and/or quality of the products.

It will be understood that in certain embodiments an aqueous solvent used in the methods of the present invention may be heated and pressurised beyond its critical temperature and/or beyond its critical pressure (i.e. beyond the 'critical point' of the solvent) during treatment in the reactor. Accordingly, the solvent may be a 'supercritical' aqueous solvent if heated and pressurised beyond the 'critical point' of the aqueous solvent. In some embodiments the aqueous solvent (e.g. water) in a reaction mixture with a (potentially extruded) polymeric material may be heated and pressurised to level(s) above its critical temperature and pressure (i.e. above the 'critical point' of the aqueous solvent). Accordingly, the mixture may comprise a 'supercritical' aqueous solvent when performing the methods. In other embodiments an aqueous solvent (e.g. water or superheated steam) in a reaction mixture with a (potentially extruded) polymeric material may be heated and pressurised to level(s) below its critical temperature and pressure (i.e. below the 'critical point' of the aqueous solvent). Accordingly, the mixture may comprise a 'subcritical' aqueous solvent when performing the methods. For example, the 'subcritical' solvent may be heated and/or pressurised to level(s) approaching the 'critical point' of the solvent (e.g. between about 10°C to about 50°C below the critical temperature and/or between about 10 bar to about 50 bar below its critical pressure). In still other embodiments, an aqueous solvent (e.g. water) in a reaction mixture with (extruded) polymeric material may be heated and pressurised to levels both above and below its critical temperature and pressure (i.e. heated and/or pressurised both above and below the 'critical point' of the solvent at different times). Accordingly, the aqueous solvent of the mixture may oscillate between 'subcritical' and 'supercritical' states when performing the methods. In certain embodiments, treatment of a reaction mixture comprising a (potentially extruded) polymeric material, an aqueous solvent (e.g. water), and optionally any one or more of: (i) supplementary catalysts, and/or (ii) oil, none of which are derived from the polymeric feedstock, aqueous solvent, or the walls of a reactor apparatus in which the treatment is carried out, and none of which are products generated in situ during the preparation and/or treatment of the reaction mixture, may be conducted at: temperature(s) of above 370°C and pressure(s) of above 20 bar; temperature(s) of above 370 °C and pressure(s) above 40 bar; temperature(s) of above 370°C and pressure(s) of above 60 bar; temperature(s) of above 370°C and pressure(s) of above 80 bar; temperature(s) of above 370°C and pressure(s) of above 100 bar; temperature(s) of above 370°C and pressure(s) of above 120 bar; temperature(s) of above 370°C and pressure(s) of above 140 bar; temperature/ s) of above 370°C and pressure(s) of above 160 bar; temperature(s) of above 370°C and pressure(s) of above 180 bar: temperature(s) of above 370°C and pressure(s) of above 200 bar; temperature(s) of above 370°C and pressure(s) of above 220 bar; temperature(s) of above 370°C and pressure(s) of above 240 bar; temperature(s) of above 370°C and pressure(s) of above 260 bar: temperature(s) of above 370°C and pressure(s) of above 280 bar; temperature(s) of above 370°C and pressure(s) of above 300 bar; temperature(s) of above 370°C and pressure(s) of above 350 bar; temperature(s) of above 400°C and pressure(s) of above 20 bar; temperature(s) of above 400 °C and pressure(s) above 40 bar; temperature(s) of above 400°C and pressure(s) of above 60 bar; temperature(s) of above 400°C and pressure(s) of above 80 bar; temperature(s) of above 400°C and pressure(s) of above 100 bar; temperature(s) of above 400°C and pressure(s) of above 120 bar; temperature(s) of above 400°C and pressure(s) of above 140 bar; temperature(s) of above 400°C and pressure(s) of above 160 bar; temperature(s) of above 400°C and pressure(s) of above 180 bar: temperature(s) of above 400°C and pressure(s) of above 200 bar; temperature(s) of above 400°C and pressure(s) of above 220 bar; temperature(s) of above 400°C and pressure(s) of above 240 bar; temperature(s) of above 400°C and pressure(s) of above 260 bar: temperature(s) of above 400°C and pressure(s) of above 280 bar; temperature(s) of above 400°C and pressure(s) of above 300 bar; temperature(s) of above 400°C and pressure(s) of above 350 bar temperature(s) of above 374°C and pressure(s) of above 221 bar; temperature(s) of above 375°C and pressure(s) of above 225 bar; temperature(s) of between 370°C and 550°C and pressure(s) of between 20 bar and 400 bar; temperature(s) of between 374°C and 500°C and pressure(s) of between 221 bar and 400 bar; temperature(s) of between 374°C and 550°C and pressure(s) of between 221 bar and 400 bar; temperature(s) of between 375°C and 550°C and pressure(s) of between 221 bar and 400 bar; temperature(s) of between 375°C and 550°C and pressure(s) of between 221 bar and 400 bar.

Examples of supplementary metal catalysts are solid state transition metal catalysts. In particular, the supplementary metal catalysts are solid state transition metal catalysts, and the oxidation state of the transition metal is initially a formal zero valent oxidation state. As typical example, the zero valent metal is selected from any of zero valent iron and nickel. According to specific embodiments, the supplementary metal catalysts catalyses the transfer of hydrogen atoms from the aqueous solvent to the hydrocarbon products arising from said treating of the polymeric material.

In certain embodiments treatment of a mixture comprising a (potentially extruded) polymeric material and an aqueous solvent (e.g. water) using the methods of the invention may be conducted at: temperatures of between 400°C and 550°C and pressures of between 100 bar and 300 bar.

In certain embodiments, the reaction mixture may be treated at a temperature between 370°C and 500°C, between 370°C and 480°C, between 374°C and 500°C, between 380°C and 500°C, between 380°C and 450°C, between 400°C and 480°C, or between 440°C and 480°C; and the pressure may be more than 100 bar. In some embodiments the reaction mixture may be treated at a temperature greater than about: 350°C, 360°C, 370°C, 380°C, 390°C, 400°C, 410°C, 420°C, 430°C, 440°C, 450°C, 460°C, 470°C, or 480°C. In some embodiments the reaction mixture is treated at any one of the temperatures referred to in this paragraph and at a pressure that is greater than about: 180 bar, 200 bar, 220 bar, 240 bar, 260 bar, 280 bar, 300 bar, or 320 bar. In certain embodiments, the pH of the polymeric material melt stream/extrudate, supercritical aqueous solvent, and/or reaction mixture may be maintained at a pH of more than: 6, 7, 8, 9, 10 or 11, for example, by the addition of base. This may serve to minimise acid- catalysed isomerization and/or hydration reactions of alkenes, especially of 1-alkenes, during the process. The pH may be measured after the depressurization of the product stream. The pH may be measured after the cooling of the product stream to a temperature of less than 100 °C.

The specific time period over which a reaction mixture of the present invention comprising polymeric material (e.g. an extrudate of polymeric material) and a solvent (e.g. a supercritical aqueous solvent, in particular supercritical water) may be treated at a target temperature and pressure (i.e. the "retention time") to provide products may depend on a number different factors including, for example, the type of polymeric material under treatment and the relative proportions or types of components in the reaction mixture (e.g. the proportion of aqueous solvent, additive catalyst(s), and/or any other additional component/s), and/or the type of apparatus in which the methods are performed. These and other factors may be varied in order to optimise a given method so as to maximise the yield of certain products and/or reduce the processing time. Preferably, the retention time is sufficient to convert or substantially all of the polymeric material used as a feedstock into hydrocarbon products. In certain embodiments, the retention time is less than about 60 minutes, 45 minutes, 30 minutes, 25 minutes, 20 minutes, 15 minutes, 10 minutes or less than about 5 minutes. In certain embodiments, the retention time is more than about 60 minutes, 45 minutes, 30 minutes, 25 minutes, 20 minutes, 15 minutes, 10 minutes or more than about 5 minutes. In other embodiments, the retention time is between about 1 minute and about 60 minutes. In additional embodiments, the retention time is between about 5 minutes and about 45 minutes, between about 5 minutes and about 35 minutes, between about 10 minutes and about 35 minutes, or between about 15 minutes and about 30 minutes. In further embodiments, the retention time is between about 20 minutes and about 30 minutes. The optimal retention time for a given set of reaction conditions as described herein may be readily determined by the skilled addressee by preparing and running a series of reactions that differ only by the retention time, and analysing the yield and/or quality of upgraded product generated. The average residence or retention time may be determined or measured or constrained by the flow rate of the extrudate and/or the aqueous solvent. In some embodiments the retention time in the reactor, calculated assuming plug flow of a fluid with the density of an idealised mixture of water plus oil derived from polymeric material, at the reaction temperature, is about 30 seconds, about 1 minute, about 2 minutes, about 5 minutes, between 5 minutes and 10 minutes, between 10 minutes and 20 minutes, between 20 minutes and 30 minutes, between 30 minutes and 40 minutes, greater than 40 minutes, or less than about 60 minutes.

In the method, it is possible to remove, at least partially, from process stream materials that are solids at the reaction temperature and pressure. Without limitation solids may be mineral matter contained within the polymeric feedstocks such as fillers, opacifiers, pigments, rheology modifiers and the like. The solids may be ash. The solids may be contaminants in the feedstock such as, for example, glass, small stones, metal particles, or metal foil pieces. The solids may be carbon-containing materials formed during chemical reactions in the process. The solids generally have a higher density than the process fluids at the reaction temperature and pressure and (in vertical reactors) solid particles will settle under gravity under conditions where the particle sedimentation velocity is greater than the fluid flow velocity, as explained in WO 2021/064647.

The hydrocarbon products obtained by the breakdown of the polymeric material under hydrothermal conditions may be separated during step c) in different fractions, by known processes, and in particular by a distillation process to lead to the distillation residue incorporated in the bituminous compositions of the invention.

According to the method described in WO 2021/064647, the reaction mixture is converted into a fluid product stream that can be depressurized by means of a flash depressurization at the reaction temperature. The flash depressurization may constitute a form of heat recovery, wherein the heat energy released during depressurization may be used to fractionate the product into at least two different boiling ranges using, for example, a distillation column directly connected to the flash depressurization unit. According to some embodiments, the depressurized stream is directed into a depressurization and fractionation vessel or vessels wherein the stream is fractionated into at least three boiling range fractions plus a gas and/or vapour stream. A part of the energy in the process stream fluids is thereby used to fractionate the product stream into product fractions e.g. gas/vapour, naphtha, middle distillate or gas oil, heavy gas oil, heavy residue corresponding to the distillation residue used in the bituminous composition of the invention.

The fractionation process would otherwise require the product stream to be later heated under vacuum in e.g. a vacuum distillation unit, requiring energy input.

In certain embodiments according to WO 2021/064647, the reaction mixture may be flash depressurized from a temperature of at least 350°C, 375°C, 400°C, 410°C, 420°C, 430°C, 440°C, 450°C or at least 460°C and a pressure of at least 200 bar, 220 bar, 240 bar, 260 bar, 280 bar, 300 bar to a pressure of less than 25 bar, 20 bar, 15 bar, 10 bar, 8 bar, 6 bar, 4 bar, 2 bar, 1.5 bar, 1.2 bar absolute. In certain embodiments, the flash depressurization may be regulated by means of one or more valves.

As referred to herein, boiling points will be taken to mean atmospheric equivalent boiling points (AEBP) unless otherwise stated.

In certain embodiments the depressurization-fractionation apparatus may comprise a flash vessel and two or more condensers in series as exemplified in Figure 4 of WO 2021/064647 incorporated by reference. In the case where two condensers are used, the first condenser may be employed to condense distillates boiling in the range approximately 200°C to 450°C or 200°C to 500°C or 200°C to 550°C AEBP, or 200°C to 560°C AEBP the second condenser may be employed to condense distillates boiling in the range approximately 20°C to 200°C AEBP, and fractions boiling above 450°C or 500°C or 550°C or 560°C AEBP may be retained in the bottom of the flash vessel and periodically or continually drained to storage vessels. Water may be separated from the output of the second condenser by means of decantation, the water being more dense than and immiscible with the liquid products. In certain embodiments, the depressurization-fractionation apparatus comprises a flash vessel and a fractionating column in series as exemplified in Figure 5 of WO 2021/064647 incorporated by reference. In certain embodiments, the vessel comprising fractionation column may act also as the flash vessel (i.e. the fractionating column is itself a flash vessel). The fractionating column may be used to separate product fractions into at least three boiling ranges. The boiling ranges may be, for example, about 20 °C to about 200 °C AEBP, about 200 °C to about 360 °C AEBP, about 360 °C to about 450°C AEBP, or 360 °C to about 500 °C AEBP, or 360 °C to about 550 °C AEBP, or 360 °C to about 560 °C AEBP. Gases and vapours not condensed by the primary condenser may be directed to a boiler and/or a flare for combustion. Water may be separated from the lowest boiling liquid fraction (e.g. the fraction boiling from about 20 °C to about 200 °C AEBP) or other liquid fractions by means of a separator. The separator may, for example, be a gravity plate separator, an API-separator, an electrostatic separator. Alternatively or additionally the separator may be an enhanced gravity separator e.g. a centrifuge, a decanter centrifuge, or a hydrocyclone. Fractions boiling above about 450 °C or 500 °C or 550°C or 560°C AEBP may be retained in the bottom of the flash vessel and periodically or continually drained to storage vessels.

In certain embodiments steam or superheated steam or supercritical water may be additionally introduced into the depressurization vessel in order to facilitate fractionation of the liquid products.

The processes of heating/pressurisation and cooling/depressurisation and fractionation can be performed in a continuous flow system as described in WO 2021/064647. The fractionating column may contain distillation trays for the separation of condensed liquid product. The fractionating column may fractionate the product stream into different boiling ranges. As referred to herein, boiling points will be taken to mean atmospheric equivalent boiling points (AEBP) unless otherwise stated. For example, the fractionating column may separate the product stream by boiling range into a naphtha fraction boiling between about 70°C and about 210°C AEBP and a distillate gas oil fraction boiling between about 210°C and about 360°C AEPB and a heavy gas oil fraction boiling between about 360 °C to about 400°C AEBP, about 360 °C to about 450°C AEBP, or 360 °C to about 500 °C AEBP, or 360 °C to about 550 °C AEBP or 360 °C to about 560 °C AEBP. The gas oil and heavy gas oil fractions may be wholly or partly waxy solids at 25 °C. Gases and vapours not condensing in the column may pass to a condenser which may condense a low boiling oil (naphtha fraction). The naphtha fraction and any other condensed fractions may be wholly or partly recirculated into the fractionating column. The gases and vapours passing the condenser may be directed to the boiler whereupon the gases may be combusted producing the supercritical aqueous solvent, optionally with the addition of an additional fuel gas such as natural gas. The combustion may recover energy from the gas and can destroy any compounds of environmental concern in the combustion process. Optionally, some or all of the gases and vapours may be directed to a flare. The flare may be an enclosed flare.

The distillation fraction used in the bituminous composition of the invention is the non-distillable part of the product stream, having an initial boiling point of at least 450°C, in particular having an initial boiling point in the range 490-560 °C. It may be continuously or intermittently removed from the bottom of the depressurisation vessel (located at the bottom of the fractionating column). It will be evident to those skilled in the art that the fractionating column may be operated in a manner known in the field to provide desired boiling temperature for the distillation residue.

In some embodiments of the present invention the lower part of the flash column can be a demister. Without any particular limitation, the mixture entering the flash column after being pressure reduced from very high pressure to near atmospheric pressure may predominantly be in the gaseous phase with liquid droplets of high boiling hydrocarbons comprising an aerosol. The design of the lowest section of the flash column is therefore to act as a demister separating the high boiling hydrocarbon droplets from the gaseous mixture.

Herein, and in the full specification, the distillation residue of hydrocarbon products obtained by the breakdown of a polymeric material under hydrothermal conditions, said distillation residue having an initial boiling point measured according to ASTM D7169:20 standard of at least 450°C, in particular having an initial boiling point in the range 490-560 °C, is, most of the time simply named "distillation residue".

Suitable columns and apparatus that can be sued are described in WO 2021/064647.

The distillation residue in the bituminous compositions of the invention corresponds to heavy products having an initial boiling point measured according to ASTM D7169:20 standard of at least 450°C. These heavy products may be qualified as waxy residues.

The term "boiling point" refers to the boiling point generally used in the oil and gas industry. Boiling points are measured at atmospheric pressure. The initial boiling point is defined as the value of the temperature when the first vapor bubble is released. The final boiling point is the highest temperature that can be reached during a standard distillation. At this temperature, no more vapor can be carried into the condensation units used for the distillation. The determination of the initial and final boiling point is known and can be carried out according to ASTM D7169:20 standard.

The distillation residue may also contain inorganic fillers from the plastic melt stream of waste plastics. When present, these inorganic fillers are, in general, predominantly calcium carbonate, and most of the time, with a particle size smaller than 50 microns.

In general, the distillation residue comprises a mixture of paraffins, olefins, naphtenics and aromatics. In particular, in the distillation residue, the paraffins represent 30 to 50% by weight of the distillation residue, the olefins and naphtenics represent, together, 30 to 50% by weight of the distillation residue, the aromatics represent 10 to 30% by weight of the distillation residue. The distillation residue may comprise less than 0.5% by weight of asphaltenes and/or less than 0.0002% by weight of polycyclic aromatic hydrocarbon.

Advantageously, the distillation residue has a penetrability, measured at 25 °C according to EN 1426, of at most 35 1/10 mm.

According to preferred embodiments, the distillation residue has a boiling point measured according to ASTM D7169:20 standard, corresponding to 5% by weight, of at least 500°C and/or the distillation residue has a boiling point measured according to ASTM D7169:20 standard, corresponding to 10% by weight, of at least 530°C and/or the distillation residue comprises a fraction having a melting point of at least 110°C, and preferentially of at least 120°C. This melting point can be observed by differential scanning calorimetry.

According to certain embodiments, the distillation residue has a dynamic viscosity at 140°C measured according to EN 13302 standard of at least 20 mPa.s, and preferentially of at least 30 mPa.s.

In particular, a distillation residue obtained by the breakdown of waste plastics under hydrothermal conditions may have a phosphorous content of at least 5 ppm, and preferentially of at least 10 ppm. In particular, a distillation residue obtained by the breakdown of plastic wastes under hydrothermal conditions has a silicon content of at least 5 ppm, and preferentially of at least 10 ppm. The contents of phosphorus, silicon and calcium can be determined by elemental analysis. These amounts can be considered as characteristic of distillation residues obtained from waste plastics.

According to specific embodiments, the distillation residue represents from 1% to 40% by weight, preferentially from 2% to 30% by weight, more preferentially from 5% to 20% by weight, and typically 10% by weight, based on the total weight of the bituminous composition.

### Polymer

According to some embodiments, the bituminous composition of the invention further comprises at least one polymer, preferably selected from elastomers, and in particular crosslinked elastomer.

The polymer is preferably selected from block copolymers, more preferentially selected from block copolymers based on conjugated diene units and monovinyl aromatic hydrocarbon units.

The conjugated diene is preferably selected from those having from 4 to 8 carbon atoms per monomer, for example from butadiene, 2-methyl-1,3-butadiene (isoprene), 2,3-dimethyl-1,3-butadiene, 1,3-pentadiene and 1,2-hexadiene, chloroprene, carboxylated butadiene, carboxylated isoprene, in particular from butadiene, isoprene, and mixtures thereof.

The monovinyl aromatic hydrocarbon is preferably selected from styrene, o-methyl styrene, p-methyl styrene, p-tert-butylstyrene, 2,3-dimethyl-styrene, vinyl naphthalene, vinyl toluene, vinyl xylene, and the like or mixtures thereof, in particular styrene.

More preferentially, the polymer consists of one or more block copolymers selected from styrene-butadiene, styrene-isoprene, styrene-chloroprene, carboxylated styrene-butadiene or carboxylated styrene-isoprene copolymers. A preferred block copolymer is a copolymer based on butadiene units and styrene units such as the styrene-butadiene SB block copolymer or the styrene-butadiene-styrene SBS block copolymer.

The styrene-conjugated diene block copolymer, in particular the styrene-butadiene block copolymer, advantageously has a styrene content by weight ranging from 5% to 50%, preferably from 20% to 50%, based on the total weight of the copolymer.

The styrene-conjugated diene block copolymer, in particular the styrene-butadiene block copolymer, advantageously has a (1,2- and 1,4-)butadiene content by weight ranging from 50% to 95%, based on the total weight of the copolymer.

The styrene-conjugated diene block copolymer, in particular the styrene-butadiene block copolymer, advantageously has a 1,2 vinyl group content by weight ranging from 10% to 70%, preferably from 10% to 50%, more preferentially from 10% to 40%, even more preferentially from 15% to 40%, advantageously from 20% to 40%, based on the total weight of the copolymer. The 1,2 vinyl units are the units which result from the polymerization via the 1,2 addition of the butadiene units.

The weight-average molecular weight of the styrene-conjugated diene block copolymer, and notably that of the styrene-butadiene copolymer, may be comprised, for example, between 10 000 and 500 000, preferably 50 000 and 200 000 and more preferentially from 50 000 to 150 000 daltons.

In some specific embodiments, the total amount of polymer in the bituminous composition according to the invention is less than or equal to 14% by weight, preferably from 0.1 to 12% by weight, more preferentially from 0.5 to 9% by weight, advantageously, advantageously from 1 to 8% by weight, based on the total weight of the bituminous composition. The content of polymer, and in particular of elastomer, will be adjusted by the skilled person, according to the final use of the bituminous composition. In particular, the following quantity are particularly suitable: for a bituminous composition in concentrated form: 6.5wt%; for a bituminous composition corresponding to road grade: 4wt%; for a bituminous composition used in carpet tiles: 2wt%; these wt% are based on the total weight of the bituminous composition.

When the bituminous composition according to the invention comprises at least one polymer, it may optionally also comprise at least one crosslinking compound capable of reacting with said polymer.

Preferably, according to this optional alternative, the polymer is selected from elastomers and/or plastomers that may be functionalized and/or may have reactive sites.

Preferably, the crosslinking compound is selected from vulcanizing agents and crosslinking agents.

Among the vulcanizing agents, mention may be made of vulcanizing agents based on sulfur and derivatives thereof. The vulcanizing agents are generally introduced into the bituminous composition according to the invention in a content ranging from 0.01 % to 30 % by weight based on the weight of elastomer.

Among the crosslinking agents, mention may be made of cationic crosslinking agents such as mono- or polyacids; carboxylic anhydrides; carboxylic acid esters; sulfonic, sulfuric or phosphoric acids; acid chlorides; phenols and mixtures thereof. The crosslinking agents are capable of reacting with the elastomer and/or the functionalized plastomer. They can be used in addition to or instead of the vulcanizing agents defined above. The crosslinking agents are generally introduced into the bituminous composition according to the invention in a content ranging from 0.01% to 30% by weight based on the weight of polymer.

Furthermore, when the bituminous composition according to the invention comprises at least one vulcanizing agent based on sulfur, it may further comprise at least one hydrogen sulfide scavenger.

When the bituminous composition according to the invention comprises such a polymer, it forms a polymerised bitumen with the bitumen base.

### Fischer Tropsch Wax

According to some embodiments, the bituminous composition according to the invention further comprises at least one Fischer Tropsch wax.

These waxes (or paraffins) are synthetic waxes obtained from the Fischer-Tropsch synthesis process. They are generally prepared by reacting carbon monoxide with hydrogen, typically at elevated pressures on a metallic catalyst. The Fischer-Tropsch waxes that are preferred are the Fischer-Tropsch waxes described in application WO 99/11737. The Fischer-Tropsch waxes described in this document are Fischer-Tropsch waxes comprising a mixture of paraffins. The Fischer-Tropsch waxes comprise a majority of n-paraffins, often more than 90%, the remainder being constituted by iso-paraffins.

The average length of the paraffinic chains of the Fischer-Tropsch waxes is between 30 and 115 carbon atoms, preferably between 40 and 100, more preferentially between 60 and 90. The Fischer-Tropsch waxes have a melting point (freezing point) comprised between 65 and 105° C., preferably between 68 and 100° C. The Fischer-Tropsch waxes that may be used in the invention can be partially oxidized or fully oxidized.

Several Fischer-Tropsch waxes, are commercially available: an example is the one proposed by the company SASOL under the brand name Sasobit^{®}, ^{®}, which has a freezing point of 100° C. (ASTM D 938), a penetrability at 25° C. less than 1 1/10 mm (ASTM D 1321) and a penetrability at 65° C. of 7 1/10 mm (ASTM 1321). Other types of Fischer-Tropsch waxes that can be used are the Fischer-Tropsch waxes described in patent EP1951818. These Fischer-Tropsch waxes contain a somewhat larger quantity of isomerized paraffins than the standard Fischer-Tropsch waxes. These Fischer-Tropsch waxes comprising more iso-paraffins are characterized by a freezing point (ISO 2207) comprised between 85 and 120° C. and a PEN value at 43° C., expressed in 0.1 mm, determined according to IP 376, greater than 5.

Preferably, according to these embodiments, the bituminous composition according to the invention comprises from 0.1% to 10 by weight of one or more Fischer Tropsch waxes, more preferentially from 1% to 8% by weight, even more preferentially from 2% to 6% by weight, the percentages being expressed in relation to the total weight of the bituminous composition.

### Hydrogen Sulfide (H2S) Scavengers

According to some embodiments, the bituminous composition according to the invention further comprises at least one hydrogen sulfide (H2S) scavenger.

As hydrogen sulfide scavengers, mention may be made, by way of example, of metal, organic or inorganic salts, notably selected from zinc, cadmium, mercury, copper, silver, nickel, platinum, iron, magnesium salts or mixtures thereof. Preferably, the metal, organic or inorganic salts are selected from zinc and/or copper salts.

Examples of hydrogen sulfide scavengers are notably described in WO 2005/065177 and WO 2015/071154.

Preferably, according to these embodiments, the bituminous composition according to the invention comprises from 0.01 to 5% by weight of one or more hydrogen sulfide scavengers, more preferentially from 0.005 to 3% by weight, even more preferentially from 0.1 to 1% by weight, the percentages being expressed in relation to the total weight of the bituminous composition.

### Adhesion Promoters

In order to improve the mutual affinity between the binder consisting of bitumen and the waxes and the fillers/aggregates (used for road applications) and to ensure its durability, adhesion promoters can also be added to the bituminous composition according to the invention. These are, for example, nitrogenous surfactant compounds derived from fatty acids (amines, polyamines, alkyl polyamines, etc.). Examples of aminated additive, suitable as adhesion promoter, are notably described in WO 2018/206489.

When added to the bituminous composition, the adhesion promoters preferably represent from 0.05% to 1% by weight based on the weight of the bituminous composition. For example, in some embodiments, from 0.05% to 0.5% by weight of adhesion promoters, preferably from 0.1% to 0.4% by weight of adhesion promoters, are added.

### Manufacturing method of the bituminous compositions

According to the invention, the specific distillation residue as previously described is introduced in a bituminous composition. The order of introduction of the different constituents of a bituminous composition according to the invention does not appear to influence the properties of the bituminous composition thus obtained.

In a preferred embodiment, the different constituents of the bituminous composition are added subsequently. Preferably, when a polymer is present in the composition, this(these) is(are) added first to the bitumen base(s), after the distillation residue is added. When the bituminous composition comprises a crosslinked elastomer, it is introduced in its crosslinkable form and the crosslinkage occurs during the preparation of the bituminous composition, in the presence of at least a part of the bitumen base. When a vulcanizing agent is used in addition to the polymer, it will be preferably included before the distillation residue. For practical reasons, the reticulation/maturation of the bitumen base with the polymer, when the polymer is a cross-linkable elastomer may be performed, before the addition of the distillation residue. In this case, the crosslinkable elastomer can be mixed with a portion of a first bitumen that will form the bitumen base, crosslinked and after blended with a complementary amount of bitumen (the same or different from the first bitumen). It is also possible to introduce the distillation residue before a step of reticulation/maturation. The total amount of bitumen base may be present at the beginning or supplemented later, for instance with the incorporation of the distillation residue or at another stage.

The different components of the bituminous composition are mixed at a temperature in the range of 90 to 230°C, preferably of 120° to 200°C. The mixture of the different constituents of the bituminous composition is conventionally obtained under stirring, for instance during a period of time of at least five minutes, preferably from 5 minutes to 10 hours, more preferably from 10 minutes to 5 hours, more preferably from 20 minutes to 4 hours. The bitumen base(s) is(are) also generally heated under agitation, before the incorporation of the distillation residue and the optional other additive(s). The parameters of the mixing and the temperature will be adjusted by the person skilled in the art, with respect to the bitumen base(s), in order to get their melting. Advantageously, the distillation residue is also generally heated before its incorporation, in order to be added in a molten state.

Of course, all the components of the composition are incorporated, in the appropriate amount to achieve the target amount in the final bituminous composition.

Afterwards, the final bituminous composition can be transferred into a maturing tank, preferably for a period of time of at least 30 minutes, more preferentially from 30 minutes to 24 hours, more preferentially still from 1 hour to 10 hours, before it is stored or used. The maturing is preferably carried out at a temperature ranging from 100 to 200°C, more preferentially ranging from 150 to 200°C, more preferentially still ranging from 160 to 200°C, advantageously from 160 to 180°C.

### Bituminous composition according to the invention

The weight percentages given in all the description are based on the total weight of the bituminous composition. So, the total percentages of the constituents present in the composition are equal to 100 %.

According to a first embodiment, the invention concerns bituminous compositions which comprise and, advantageously consist exclusively of:
- from 70% to 99% by weight, preferentially from 75% to 95% by weight, more preferentially from 80% to 95% by weight, of a bitumen base;
- from 1% to 40% by weight, preferentially from 2% to 30% by weight, more preferentially from 5% to 20% by weight, of a distillation residue of hydrocarbon products obtained by the breakdown of a polymeric material under hydrothermal conditions, said distillation residue having an initial boiling point measured according to ASTM D7169:20 standard of at least 450°C.

According to a second embodiment, the invention concerns bituminous compositions which comprise and, advantageously consist exclusively of:
- from 58% to 98.5 % by weight, preferentially from 71% to 97.5 % by weight, more preferentially from 80% to 94% by weight, and typically from 80% to 90% by weight a bitumen base;
- from 1% to 40% by weight, preferentially from 2% to 30% by weight, more preferentially from 5% to 20% by weight of a distillation residue of hydrocarbon products obtained by the breakdown of a polymeric material under hydrothermal conditions, said distillation residue having an initial boiling point measured according to ASTM D7169:20 standard of at least 450°C;
- from 0.5% to 15% by weight, more preferentially from 0.5% to 10% by weight, advantageously, advantageously from 1% to 8% by weight of a polymer, in particular of an elastomer, and more specifically of a block copolymers based on conjugated diene units and monovinyl aromatic hydrocarbon units.

According to a third embodiment, the invention concerns bituminous compositions which comprise and, advantageously consist exclusively of:
- from 53% to 98.5 % by weight, preferentially from 68% to 97.5 % by weight, more preferentially from 79% to 94% by weight, of a bitumen base;
- from 1% to 40% by weight, preferentially from 2% to 30% by weight, more preferentially from 5% to 20% by weight, of a distillation residue of hydrocarbon products obtained by the breakdown of a polymeric material under hydrothermal conditions, said distillation residue having an initial boiling point measured according to ASTM D7169:20 standard of at least 450°C;
- from 0.5% to 15% by weight, more preferentially from 0.5% to 10% by weight, advantageously, advantageously from 2% to 8% by weight, of a polymer, in particular of an elastomer, and more specifically of a block copolymers based on conjugated diene units and monovinyl aromatic hydrocarbon units;
- a vulcanizing agent based on sulfur and derivatives thereof in a content ranging from 0.01 % to 30 % by weight based on the weight of polymer.

The preferred wt% given for the first, second and third embodiments are advantageously combined with each other's. When the bituminous composition comprises several bitumen bases and/or several distillation residues and/or several polymers (in particular elastomers), the corresponding given wt% concerns their total amount.

Of course, the bitumen base, the distillation residue and the polymer, in particular the elastomer when present, specifically described or preferred in the previous specification, are preferentially used.

### Applications

The bituminous compositions according to the invention can be used in the fields of road applications or in the fields of industrial applications. Whatever the field of application, the bituminous composition is generally used as a bituminous binder and is shaped and/or associated with other components under heat. Conventionally, the heating temperature is in the range 80 to 240°C, more preferably in the range of 90 to 230°C, even more preferably in the range of 100°C to 180°C.

In road applications, the bituminous composition is, in particular, used for the manufacture of hot/warm bituminous mixes, asphalts or surface coatings. For instance, the bituminous composition may be included in bituminous mixes as materials for the construction and the maintenance of road foundations and their surfacing, and for all road works. Thus, the bituminous composition can be combined with aggregates and/or inorganic and/or synthetic fillers under heat and applying the obtained material to form a part of the road.

The bituminous composition can be employed to prepare a combination with aggregates, advantageously with road aggregates, in particular to form a bituminous mix.

A bituminous mix is understood to mean a mixture of a bituminous composition with aggregates and optionally inorganic and/or synthetic fillers. In general, the aggregates and the inorganic and/or synthetic fillers, when they are present, represent from 88 to 98 %, preferably from 91 to 97 % by weight of the bituminous mix and the bituminous composition from 2 to 12 %, preferably from 3 to 9 % by weight of the bituminous mix.

The aggregates are inorganic and/or synthetic aggregates, in particular, recycled milled products, with dimensions of greater than 2 mm, preferably of between 2 mm and 20 mm. Inorganic and/or synthetic fillers are preferably chosen from fines, sand, stone chips and recycled milled products.

As regards the road applications, the bituminous composition is also targeted at asphalts as materials for constructing and covering sidewalks. Asphalt is understood to mean a mixture of a bituminous composition with inorganic and/or synthetic fillers. Such an asphalt comprises a bituminous composition and inorganic fillers, such as fines, sand or stone chips, and/or synthetic fillers. The inorganic fillers are composed of fines (particles with dimensions of less than 0.063 mm), of sand (particles with dimensions of between 0.063 mm and 2 mm) and optionally of stone chips (particles with dimensions of greater than 2 mm, preferably of between 2 mm and 4 mm).

The asphalts exhibit 100% compactness and are mainly used to construct and cover sidewalks, whereas the mixes have a compactness of less than 100% and are used to construct roads. Unlike the mixes, the asphalts are not compacted with a roller when being put in place.

Another aspect of the present invention relates to the use of a bituminous composition according to the invention for different industrial applications, notably as binder or coating.

The bituminous composition according to the invention is particularly advantageous for the preparation of a sealing coating, an insulating coating, a roofing material, a membrane, a carpet material or an impregnation layer.

In industrial applications, the bituminous composition is, in particular, used for the manufacture of internal or external coatings, advantageously for preparing a leaktight coating, a membrane or a seal coat. As regards the industrial applications of the bituminous compositions, mention may be made of the preparation of waterproof roofing underlayments, of leaktight membranes, of noise-reduction membranes, of insulating membranes, of surface coatings, of carpet tiles or of seal coats. As specific examples of uses, the bituminous compositions may be used for the manufacture of waterproof membranes for ships or as coatings for insulating transport pipes.

The bituminous composition according to the invention is particularly suitable for the preparation of a sealing coating, a noise barrier, an isolation membrane, a surface coating, a carpet tile, an impregnation layer or a roofing material. In carpet tiles applications, a mixture of the bituminous composition and fillers is used to coat the backside of a planar body having a traffic surface or wear layer. Fillers include but are not limited to, calcium carbonate (limestone), silicates, silica, oxides of silica, carbonates, sulphates, oxides of antimony, aluminum trihydrate, flourates, chlorates, borates, and phosphates, as well as other types of fillers known to one skilled in the art. Generally, carpet tiles include a planar body made of textile fibers normally composed of natural and/or synthetic fiber materials including wool, cotton, nylon, acrylic, polypropylene or mixtures thereof. The textile fibers may be woven or tufted by any method of carpet manufacture known to one skilled in the art. More detailed on carpet tiles that can include the bituminous composition of the invention, in the matrix or as the matrix used in combination with fillers to coat the backside of a planar body are, for instance, given in EP 1247891.

The invention is illustrated by the following non-limiting examples.

### Examples

In the following examples, the percentages are indicated by weight, with respect to the final bituminous composition, unless otherwise specified.

### Testing methods

The needle penetrability was measured at 25°C according to the standard EN 1426 (penetration in the Tables).

The ring and ball softening temperature was measured according to the standard EN 1427 (softening point in the Tables).

The dynamic viscosity was measured according to EN 13302 standard, from 80°C to 180°C.

The FRAASS point is an indicator of the low temperature fragility and was determined by EN 12593 standard.

The resistance of the bituminous compositions against hardening was tested according to EN 12607-1 standard. The European Standard DIN EN 12607-1 specifies a method for measuring the combined effects of heat and air on a thin film of a bituminous composition in constant renewal. It simulates the hardening undergone by a bituminous composition during mixing before coating applications.

The bituminous compositions were subjected to a storage stability test during 7 days, in accordance with standard EN 13399 at 180° C.

Complex modulus G* of the bituminous composition measured from 15° C to 60° C. and at frequency's between 0.1 100 Hz: unit=MPa or Pa, EN 14770 standard. The test was performed using an oscillating shear rheometer The results are reported as a function of the angular frequency expressed in rad/s.

Multiple Stress Creep Recovery Test (MSCRT) measurement, measured according to the standard EN 16659. The test was carried out using a DSR dynamic shear rheometer in creep mode at a temperature of 60° C. The irreversible creep compliance was measured, that is to say the residual deformation of a test specimen after a creep-recovery cycle divided by the applied stress.

### Distillation residues

Several distillation residues, obtained according to the method described in WO 2021/064647, from waste plastics have been used. One had an initial boiling point measured according to ASTM D7169:20 standard equal to 500°C (named PRS500) and the other had an initial boiling point measured according to ASTM D7169:20 standard equal to 550°C (named PRS550). For their characterisation, the distillation residues were heated in an oven at 150°C and then poured and tested.

The polynuclear aromatic hydrocarbons (PAHs) content of the distillation residues was also analysed by the Grimmer method (SOP PAH-0397). The content of each PAHs selected acenaphthylene, acenaphthene, fluorene, naphthalene, phenanthrene, anthracene, fluoranthene, pyrene, benz[a]anthracene, chrysene, benzo[b]fluoranthene, benzo[*j*]fluoranthene, benzo[*k*]fluoranthene, benzo[a]pyrene, dibenz[*a*,*h*]anthracene, benzo[ghi]perylene and indeno[1,2,3-*cd*]pyrene was found under the limit of detection of 1 mg/kg. As a result their overall amount was under 18 mg/kg, corresponding to wt% under 0.0018 wt% of the distillation residue.

### Manufacture of the bituminous compositions

### First type of bituminous compositions

The PRS550 or PRS500 and the 40/60 bitumen base were heated to 150°C and blended for 30 minutes. The three following bituminous compositions were prepared:
- 98 wt% 40/60 bitumen and 2 wt% PRS550 (**composition 1**);
- 90 wt% 40/60 bitumen and 10 wt% PRS550 (**composition 2**);
- 90 wt% of 70/100 bitumen and 10 wt% PRS500 (**composition 3**).

### Second type of bituminous compositions comprising a polymer

A **composition 4** (polymerised bitumen) is a polymerised bitumen with a polymer content of 2 wt%, 0.002 wt% of paxl (vulcanizing agent: a sulfur-based agent commercially available from the company TOTAL MARKETING France) and 15 wt% PRS500 using the following procedure.
- 40/60 bitumen base heated to 180°C
- SBS polymer added over a 10-minute period
- Blended for 20 minutes
- High shear milling for 10 minutes
- Paxl added at 0.002 wt%
- High shear milling for 50 minutes
- PRS500 heated to 180°C, added to PmB
- Low shear stirring for 120 minutes,
- Material held at 180°C for 20 hours with no agitation
- After 20 hours of storage, the bituminous composition was tested.

A **composition 5** Final product is a polymerised bitumen with a polymer content of 4.4 wt%, 0.002 wt% of paxl (vulcanizing agent: a sulfur-based agent commercially available from the company TOTAL MARKETING France) and 10 wt% PRS500 using the following procedure.
- 165 penetration bitumen base, heated to 180°C
- SBS polymer added over a 10-minute period
- Blended for 20 minutes
- High shear milling for 10 minutes
- Paxl added at 0.002 wt%
- High shear milling for 65 minutes
- PRS500 heated to 180°C, added to PmB
- Low shear stirring for 150 minutes,
- Material held at 180°C for 20 hours with no agitation
- After 20 hours of storage, the bituminous composition was tested.

The polymer used is a SBS polymer comprising 20-30% of styrene. All the obtained results are presented in Tables 1 and 2.

| Table 1 | | | | | | |
|---|---|---|---|---|---|---|
| Sample Description | | | PRS500 | Bitumen 40/60 | Composition 1 | Composition 2 |
| Test Description | Method | Units | | | | |
| Penetration | EN 1426 | x0.1mm | 15 | 55 | 50 | 47 |
| Softening Point | EN 1427 | °C | 109.0 | 51.0 | 54.4 | 73.0 |
| Dynamic Viscosity | EN 13302 | | | | | |
| 80°C | | cPs | no result | | | |
| 90°C | | cPs | no result | | | |
| 100°C | | cPs | no result | 4288 | 3840 | 2837 |
| 110°C | | cPs | 483.2 | | 1706 | 1158 |
| 120°C | | cPs | 201.6 | 1088 | 912 | 592 |
| 130°C | | cPs | 92.8 | | 524.8 | 348.8 |
| 140°C | | cPs | 48 | 371.2 | 329.6 | 217.6 |
| 150°C | | cPs | 35.2 | | 217.6 | 144 |
| 160°C | | cPs | 28.8 | 156 | 160 | 105.6 |
| 170°C | | cPs | 25.6 | | | |
| 180°C | | cPs | 19.2 | | | |
| Fraass | | | | | | |
| Breaking Point | | °C | | -5 | -2 | 0 |
| DSR - 25 mm test plate, 1.59 Hz | EN 14770 | | | | | |
| Temperature (T1) where G* = 50kPa) | | °C | | | 43 | 48 |
| Phase angle at T1 | | δ | | | 75 | 58 |
| DSR - 8 mm test plate, 1.59 Hz | EN 14770 | | | | | |
| Temperature (T2) where G* = 5000kPa) | | °C | | | 25 | 20 |
| Phase angle at T2 | | δ | | | 64 | 52.5 |

| Table 1 (continued) | | | | | | |
|---|---|---|---|---|---|---|
| Sample Description | | | PRS500 | Bitumen 40/60 | Composition 1 | Composition 2 |
| Test Description | Method | Units | | | | |
| Rolling Thin Film Oven Test | | | | | | |
| Change in mass | EN 12607-1 | % | | 0.3% | 0.0% | -0.1% |
| Penetration at 25°C | EN 1426 | dmm | | 33 | 25 | 35 |
| Retained penetration | EN 1426 | % | | 60.0% | 50.0% | 74.5% |
| Softening point | EN 1427 | °C | | 56.8 | 60.2 | 79.6 |
| Increase in softening point | EN 1427 | °C | | 5.8 | 5.8 | 6.6 |
| 7 days storage at 160°C | | | | | | |
| Penetration | EN 1426 | x0.1mm | 12 | | 32 | 24 |
| Softening Point | EN 1427 | °C | 109.0 | | 59.4 | 77.8 |
| Dynamic Viscosity | EN 13302 | | | | | |
| 100°C | | cPs | 620 | | 5707 | 5579 |
| 110°C | | cPs | 985.6 | | 2645 | 2080 |
| 120°C | | cPs | 150.4 | | 1386 | 995.2 |
| 130°C | | cPs | 89.6 | | 809.6 | 576 |
| 140°C | | cPs | 48 | | 448 | 326.4 |
| 150°C | | cPs | 32 | | 310.2 | 224 |
| 160°C | | cPs | 28.8 | | 224 | 176 |
| 170°C | | cPs | 22.4 | | | |
| 180°C | | cPs | 22.4 | | | |

The obtained results show that according to the invention it is possible to obtain a bituminous composition with the following properties:
- a higher ring and ball temperature,
- a reduced penetrability,
- a lower viscosity,
- good mechanical properties, illustrated by their Fraass breaking point of weakness, and
- a good storage stability.

| Table 2 | | | | | |
|---|---|---|---|---|---|
| Sample Description | | | Composition 3 | Composition 4 | Composition 5 |
| Test Description | Method | Units | | | |
| Penetration | EN 1426 | x0.1mm | 90 | 44 | 58 |
| Softening Point | EN 1427 | °C | 68.6 | 92 | 95 |
| Dynamic Viscosity | EN 13302 | | | | |
| 80°C | | cPs | 23488 | no result | no result |
| 90°C | | cPs | 4941 | no result | no result |
| 100°C | | cPs | 1700 | 6123 | 8000 |
| 110°C | | cPs | 704 | 1267 | 2080 |
| 120°C | | cPs | 400 | 838.4 | 1293 |
| 130°C | | cPs | 240 | 393.6 | 860.8 |
| 140°C | | cPs | 156.8 | 291.2 | 550.4 |
| 150°C | | cPs | 112 | 198.4 | 428.8 |
| 160°C | | cPs | 83.2 | 140.8 | 310.4 |
| 170°C | | cPs | 64 | 115.2 | 220.8 |
| 180°C | | cPs | 48 | 86.4 | 195.2 |
| MSCRT at 60 °C | | | | | |
| Average percentage recovery at 0.1kPa | % | | | | 99.02 |
| Average percentage recovery at 3.2kPa | % | | | | 91.30 |
| Difference | | | | | 7.797973625 |
| Average Jnr at 0.1kPa | 1/kPa | | | | 0.00 |
| Average Jnr at 3.2kPa | 1/kPa | | | | 0.04 |
| Difference | | | | | 1935.865102 |

## Claims

1. - A bituminous composition comprising at least one bitumen base and a distillation residue of hydrocarbon products obtained by the breakdown of a polymeric material under hydrothermal conditions, said distillation residue having an initial boiling point measured according to ASTM D7169:20 standard of at least 450°C.

2. - The bituminous composition according to claim 1 wherein the distillation residue comprises a mixture of paraffins, olefins, naphtenics and aromatics.

3. - The bituminous composition according to claim 1 or 2 wherein, in the distillation residue, the paraffins represent 30 to 50% by weight of the distillation residue, the olefins and naphtenics represent, together, 30 to 50% by weight of the distillation residue, the aromatics represent 10 to 30% by weight of the distillation residue.

4. **-** The bituminous composition according to anyone of the preceding claims wherein the distillation residue comprises less than 0.5% by weight of asphaltens and/or less than 0.002% by weight of polycyclic aromatic hydrocarbon.

5. **-** The bituminous composition according to anyone of the preceding claims wherein the distillation residue has a penetrability, measured at 25 °C according to EN 1426, of at most 35 1/10 mm.

6. **-** The bituminous composition according to anyone of the preceding claims wherein the distillation residue has a boiling point measured according to ASTM D7169:20 standard, corresponding to 5% by weight, of at least 500°C.

7. **-** The bituminous composition according to anyone of the preceding claims wherein the distillation residue has a boiling point measured according to ASTM D7169:20 standard, corresponding to 10% by weight, of at least 530°C.

8. **-** The bituminous composition according to anyone of the preceding claims wherein the distillation residue comprises a fraction having a melting temperature of at least 110°C, and preferentially of at least 120°C.

9. **-** The bituminous composition according to anyone of the preceding claims wherein the distillation residue has a dynamic viscosity at 140°C measured according to EN 13302 standard of at least 20 mPa.s, and preferentially of at least 30 mPa.s.

10. - The bituminous composition according to anyone of the preceding claims wherein the distillation residue represents from 1% to 40% by weight, preferentially from 2% to 30% by weight, more preferentially from 5% to 20% by weight, based on the total weight of the bituminous composition.

11. - The bituminous composition according to anyone of the preceding claims wherein the distillation residue is obtained by the following successive steps:
a) generating a reaction mixture comprising the polymeric material and an aqueous solvent,
b) treating the reaction mixture in a reactor apparatus at a reaction temperature of at least 350°C and a reaction pressure of at least 18 MPa (180 bar) over a period of time suitable for conversion of all or a portion of the polymeric material present in the reaction mixture into a fluid product stream, depressurising the fluid product stream, the depressurising comprising reducing the pressure of the fluid product stream to less than 2.5 MPa (25 bar) in a flash vessel thereby vaporizing at least a portion of the fluid product stream and generating a vapour comprising hydrocarbon products, steam, and gas, and the vaporizing provides energy to facilitate fractionation of the hydrocarbon products into different constituent parts; and
c) fractionating the hydrocarbon products into different constituent parts by distillation and collecting a heavy distillation residue having an initial boiling point measured according to ASTM D7169:20 standard of at least 450°C .

12. **-** The bituminous composition according to claim 11 wherein the aqueous solvent is supercritical water and the generating a reaction mixture comprising the polymeric material and an aqueous solvent is carried out by the following successive steps:
- providing a molten stream of the polymeric material;
- injecting the aqueous solvent in a supercritical state into the molten stream of polymeric material; and
- mechanical mixing of the aqueous solvent and the molten stream of polymeric material.

13. **-** The bituminous composition according to anyone of the preceding claims wherein the polymeric material is waste plastics, in particular waste plastics including polyethylene and/or polypropylene.

14. **-** The bituminous composition according to anyone of the preceding claims wherein it also comprises a polymer, preferably selected from elastomers, more preferentially selected from block copolymers based on conjugated diene units and monovinyl aromatic hydrocarbon units.

15. **-** The bituminous composition according to claim 14, wherein the polymer amount, and in particular the elastomer amount, represents at most 14 % by weight, preferably from 0.1 % to 12 % by weight, more preferentially from 0.5 % to 9 % by weight, advantageously, advantageously from 1 % to 8 % by weight, based on the total weight of the bituminous composition.

16. **-** The bituminous composition according to anyone of the preceding claims wherein the bitumen base is chosen among the bitumen from the refining of crude oil.

17. - A method for the manufacture of a bituminous composition according to anyone of the preceding claims wherein the following components are mixed at a temperature in the range of 90 to 230°C, preferably of 120 to 200°C:
- a bitumen base, and
- a distillation residue of hydrocarbon products obtained by the breakdown of a polymeric material under hydrothermal conditions, said distillation residue having an initial boiling point measured according to ASTM D7169:20 standard of at least 450°C.

18. - The method according to claim 17 wherein a polymer and, in particular, an elastomer is also mixed with the bitumen base and the distillation residue.

19. - Use of a bituminous composition according to any one of claims 1 to 16 for preparing a waterproof roofing underlayment, a leaktight membrane, a noise-reduction membrane, an insulating membrane, a surface coating, a carpet tile or a seal coat.

20. - Use of a bituminous composition according to any one of claims 1 to 16, as a bituminous binder in a surface dressing, a hot mix asphalt, a warm mix asphalt, a stress absorbing membrane interface, a cold mix asphalt, a cold-cast asphalt, an emulsion gravel, a base course, a tie course, a tack course, a surface course, a rut-resistant course, a draining surfacing mix, said bituminous binder being associated with recycled aggregates and/or millings.

21. **-** A method of preparing an asphalt mix wherein it comprises hot mixing a bituminous composition according to any one of claims 1 to 16, with aggregates and/or recycled millings, and optionally mineral and/or synthetic fillers.

22. - An asphalt mix comprising a bituminous composition according to any one of claims 1 to 16, in admixture with aggregates and/or recycled millings, and optionally mineral and/or synthetic fillers.

23. **-** An asphalt comprising a bituminous composition according to any one of claims 1 to 16, mixed with mineral and/or synthetic fillers.

24. **-** Use of the bituminous composition according to claim 13 or to any one of claims 14 to 16 dependent of claim 13 to reduce the carbon footprint.
